# FASCICULE DE BREVET EUROPEEN

(11) **EP 3 400 151 B1**
(45) Date de publication et mention de la délivrance du brevet: **09.09.2020**
(21) Numéro de dépôt: 16826427.3
(22) Date de dépôt: 21.12.2016
(51) Int. Cl.: B60N 3/04, B62D 25/00, B60R 13/01

(54) **VEHICULE DONT UNE SURFACE DE CHARGEMENT PEUT ÊTRE ENTIEREMENT RECOUVERTE PAR UN TAPIS DE SOL QUI PRESENTE DES BORDURES LINEAIRES**
FAHRZEUG DESSEN LADEFLÄCHE VOLLSTÄNDIG VON EINEM TEPPICH MIT GERADEN SEITENRÄNDERN BEDECKT SEIN KANN
VEHICLE WHERE A LOADING SURFACE MAY BE ENTIRELY COVERED BY A FLOOR CARPET HAVING LINEAR SIDES

(30) Priorité: 08.01.2016 FR 1650146
(43) Date de publication de la demande: 14.11.2018
(73) Titulaire: PSA AUTOMOBILES S.A., 78300 Poissy (FR)
(72) Inventeur: RICHARD, Olivier, 68130 Wittersdorf (FR)
(74) Mandataire: Fernandez, Francis Lionel
(86) Numéro de dépôt international: PCT/FR2016/053597
(87) Numéro de publication internationale: WO 2017/118788

(56) Documents cités:
- DE-A1-102013 214 917
- FR-A1- 3 019 518
- JP-A- S60 197 438
- US-A- 6 017 074
- US-A- 6 142 550

## Description

La présente invention concerne un véhicule qui comporte une surface de chargement qui s'étend le long d'un plancher se prolongeant des montants centraux vers l'arrière du véhicule.

Elle concerne plus particulièrement un véhicule qui comporte, pour un premier côté du véhicule :
- une première zone d'accès latéral à la surface de chargement qui comporte un premier seuil de porte latérale ;
- un premier passage de roue arrière ; et
- une zone d'accès arrière à la surface de chargement qui comporte un premier montant latéral arrière,
le premier seuil de porte latérale, le premier passage de roue arrière et le premier montant latéral arrière délimitant latéralement pour le premier côté, une première bordure latérale pour une partie avant, une partie centrale et une partie arrière du plancher.

Il est connu d'avoir des véhicules qui présentent une grande surface de chargement avec deux niveaux de finitions ; une première finition de type véhicule utilitaire où le véhicule utilise la surface de changement pour charger des objets lourds et encombrants, ne nécessitant pas de tapis de sol et une seconde finition où le véhicule est destiné au transport de personnes, recevant des sièges et un tapis de sol pour améliorer le confort acoustique du véhicule. Un tel tapis de sol est constitué d'une succession de plaques de feutres, de mousses, avec éventuellement un support en bois et le tout recouvert d'une moquette. De manière connue, chaque partie de la surface de chargement présente une largeur différente faisant que le tapis de sol doit présenter des découpes latérales qui suivent le dimensionnement des différentes parties de la surface de chargement. Ce suivi est important pour que le tapis de sol remplisse bien son rôle d'insonorisation, celui-ci devant recouvrir intégralement le plancher de la surface de chargement. Le problème d'un tel tapis de sol est que ces différentes découpes, créent lors de la fabrication du tapis de sol de nombreuses chutes, qui représente un surcout important.

Les documents US 6 142 550 A et JP S60 197438 A montrent des exemples de véhicules, avec des surfaces de chargement pouvant recevoir un tapis de sol.

L'invention a pour objectif de pallier à ce problème et de proposer un véhicule qui comporte une surface de chargement qui s'étend le long d'un plancher se prolongeant des montants centraux vers l'arrière du véhicule, adapté pour recevoir un tapis de sol de forme optimisée, permettant de réduire le coût de fabrication du tapis de sol, tout en assurant une même isolation acoustique.

Plus particulièrement, l'invention a pour objet un véhicule qui comporte une surface de chargement qui s'étend le long d'un plancher se prolongeant des montants centraux vers l'arrière du véhicule et qui comporte pour un premier côté du véhicule :
- une première zone d'accès latéral à la surface de chargement comportant un premier seuil de porte latérale ;
- un premier passage de roue arrière ; et
- une zone d'accès arrière à la surface de chargement comportant un premier montant latéral arrière,
le premier seuil de porte latérale, le premier passage de roue arrière et le premier montant latéral arrière délimitant latéralement pour le premier côté, une première bordure latérale pour une partie avant, une partie centrale et une partie arrière du plancher, pour le premier côté, la bordure latérale de chacune des trois parties du plancher étant dans un même premier alignement permettant, le long du premier côté, aux trois parties du plancher d'être entièrement recouvert par un tapis de sol qui présente une première bordure linéaire, un second élément intermédiaire s'étend entre le premier passage de roue arrière et le premier montant latéral arrière en formant, avec le plancher, une bordure latérale linéaire dans le même premier alignement que la première bordure latérale pour lesdites parties du plancher, tel que le second élément intermédiaire est formé par un prolongement de la structure du premier passage de roue arrière qui s'étend jusqu'au premier montant latéral arrière.

Selon une première caractéristique de l'invention, la première zone d'accès latéral comporte un élément d'habillage qui recouvre au moins partiellement la premier partie du seuil de porte latérale, l'élément d'habillage comportant une partie d'extrémité linéaire qui forme la délimitation latérale pour le premier côté de la partie avant du plancher. Un premier élément intermédiaire s'étend entre le premier seuil de porte latérale et le premier passage de roue arrière en formant, avec le plancher, une bordure latérale linéaire dans le même premier alignement que lesdites parties du plancher. Selon un mode de réalisation préférentiel, le premier élément intermédiaire est formé par un prolongement de l'élément d'habillage de la première zone d'accès latéral.

Selon une deuxième caractéristique de l'invention, le premier alignement du premier côté du plancher s'étend de manière parallèle à l'axe longitudinal du véhicule.

Selon une troisième caractéristique de l'invention, le second côté comporte un second seuil de porte latérale, un second passage de roue arrière et un second montant latéral arrière qui délimitent latéralement, pour le second côté, la seconde bordure latérale de chacune des trois parties du plancher qui sont dans un même second alignement, permettant aux trois parties du plancher d'être entièrement recouvert par le tapis de sol qui présente deux bordures opposées linéaires.

Selon le mode préférentiel de réalisation, le second alignement s'étend parallèlement au premier alignement, faisant que le tapis de sol, qui recouvre l'ensemble du plancher, présente deux côtés opposés linéaires parallèles.

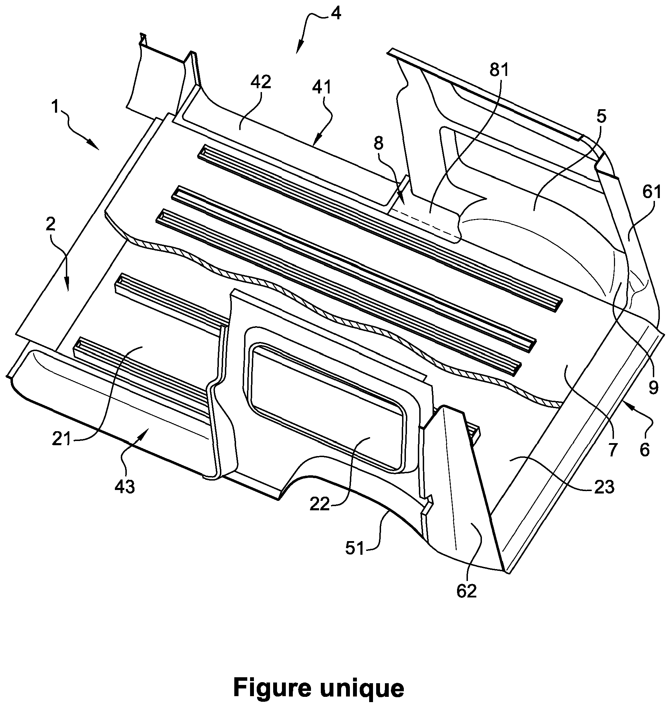

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- La figure unique représente une vue partielle, simplifiée, de la partie arrière d'un véhicule selon l'invention, comportant une surface de chargement qui s'étend le long d'un plancher se prolongeant des montants centraux vers l'arrière du véhicule et qui est recouvert par un tapis de sol.

La figure unique représente une vue partielle, simplifiée, de la partie arrière d'un véhicule comportant une surface de chargement 1 s'étendant le long d'un plancher 2 se prolongeant des montants centraux 3 vers l'arrière du véhicule et comportant pour un premier côté du véhicule :
- une première zone d'accès latéral 4 à la surface de chargement 1 comportant un premier seuil de porte latérale 41 ;
- un premier passage de roue arrière 5 ; et
- une zone d'accès arrière 6 à la surface de chargement 1 comportant un premier montant latéral arrière 61.
Le premier seuil de porte latérale 41, le premier passage de roue arrière 5 et le premier montant latéral arrière 61 délimitant latéralement pour le premier côté, une première bordure latérale pour une partie avant 21, une partie centrale 22 et une partie arrière 23 du plancher 2. Pour le premier côté du véhicule, la bordure latérale de chacune des trois parties 21, 22, 23 du plancher 2 est dans un même premier alignement. Une telle caractéristique d'alignement permet, le long du premier côté, aux trois parties 21, 22, 23 du plancher 2 d'être entièrement recouvert par un tapis de sol 7 qui présente une première bordure latérale linéaire (le tapis de sol étant partiellement représenté). La première zone d'accès latéral 4 comporte un élément d'habillage 42 qui recouvre au moins partiellement le premier seuil de porte latérale 41. L'élément d'habillage 42 comporte une partie d'extrémité linéaire qui forme la délimitation latérale pour le premier côté de la partie avant 21 du plancher 2. Un premier élément intermédiaire 8 s'étend entre le premier seuil de porte latérale 41 et le premier passage de roue arrière 5. Le premier élément intermédiaire 8 forme une bordure latérale linéaire dans le même premier alignement que la première bordure latérale linéaire définie par le premier seuil de porte latérale 41 et le premier passage de roue arrière 5. Le premier élément intermédiaire 8 est formé par un prolongement 81 de l'élément d'habillage 42 de la première zone d'accès latéral 4. Un revêtement insonorisant peut être positionné sous le premier élément intermédiaire 8 pour assurer une continuité dans l'isolation acoustique formée par le tapis de sol 7. Un second élément intermédiaire 9 s'étend entre le premier passage de roue arrière 5 et le premier montant latéral arrière 61 en formant, avec le plancher 2, une bordure latérale linéaire dans le même premier alignement que la partie avant 21, la partie centrale 22 et la partie arrière 23 du plancher 2. Le second élément intermédiaire 9 est formé par un prolongement de la structure du premier passage de roue arrière 5 qui s'étend jusqu'au premier montant latéral arrière 61. Pour une finition supérieure, un élément de recouvrement peut venir habiller le premier passage de roue arrière 5 et le second élément intermédiaire 9 jusqu'au premier montant latéral arrière 61. Le second côté comporte de manière semblable au premier côté, un second seuil de porte latérale 43, un second passage de roue arrière 51 et un second montant latéral arrière 62 qui délimitent latéralement, pour le second côté, la seconde bordure latérale de chacune des trois parties 21, 22, 23 du plancher 2 qui sont dans un même second alignement. Le second même alignement permet, aux trois parties 21, 22, 23 du plancher 2 d'être entièrement recouvert par le tapis de sol 7 qui présente deux bordures opposées linéaires. Le premier alignement et le second alignement s'étendent parallèlement à l'axe longitudinal du véhicule. Le tapis de sol 7, qui recouvre entièrement la surface de chargement de la partie arrière du véhicule, comporte deux bordures latérales opposées parallèles entre elles, alignées selon l'axe longitudinal du véhicule. Le tapis de sol 7 présente donc une forme parfaitement optimisée évitant toutes chutes de matière lors de sa fabrication. Les parties intermédiaires 8 et 9 sont adaptées pour ne pas dégrader l'isolation acoustique formée par le tapis de sol 7. Les premières et secondes parties intermédiaires 8 et 9 sont aussi adaptées pour ne représenter qu'un faible surcoût lors de la fabrication du véhicule. Un tel surcoût est bien inférieur à la baisse du coût de fabrication du tapis de sol 7.

## Revendications

1. Véhicule comportant une surface de chargement (1) s'étendant le long d'un plancher (2) se prolongeant des montants centraux (3) vers l'arrière du véhicule et comportant pour un premier côté du véhicule :
• une première zone d'accès latéral (4) à la surface de chargement (1) comportant un premier seuil de porte latérale (41) ;
• un premier passage de roue arrière (5) ; et
• une zone d'accès arrière (6) à la surface de chargement (1) comportant un premier montant latéral arrière (61),
le premier seuil de porte latérale (41), le premier passage de roue arrière (5) et le premier montant latéral arrière (61) délimitant latéralement pour le premier côté, une première bordure latérale pour une partie avant (21), une partie centrale (22) et une partie arrière (23) du plancher (2), pour le premier côté, la première bordure latérale de chacune des trois parties (21, 22, 23) du plancher (2) étant dans un même premier alignement permettant, le long du premier côté, aux trois parties (21, 22, 23) du plancher (2) d'être entièrement recouvert par un tapis de sol (7) qui présente une première bordure linéaire (1), un second élément intermédiaire (9) s'étend entre le premier passage de roue arrière (5) et le premier montant latéral arrière (61) en formant, avec le plancher (2), une bordure latérale linéaire dans le même premier alignement que la première bordure latérale pour lesdites parties du plancher (21, 22, 23), **caractérisé en ce que** le second élément intermédiaire (9) est formé par un prolongement de la structure du premier passage de roue arrière (5) qui s'étend jusqu'au premier montant latéral arrière (61).

2. Véhicule selon la revendication 1, **caractérisé en ce que** la première zone d'accès latéral (4) comporte un élément d'habillage (42) qui recouvre au moins partiellement le premier seuil de porte latérale (41), l'élément d'habillage (42) comportant une partie d'extrémité linéaire qui forme la délimitation latérale pour le premier côté de la partie avant (21) du plancher (2).

3. Véhicule selon la revendication 1 ou 2, **caractérisé en ce qu'**un premier élément intermédiaire (8) s'étend entre le premier seuil de porte latérale (41) et le premier passage de roue arrière (5) en formant, avec le plancher (2), une bordure latérale linéaire dans le même premier alignement que la première bordure latérale pour lesdites parties du plancher (21, 22, 23).

4. Véhicule selon la revendication 2 et 3, **caractérisé en ce que** le premier élément intermédiaire (8) est formé par un prolongement (81) de l'élément d'habillage (42) de la première zone d'accès latéral (4).

5. Véhicule selon l'une quelconque des revendications précédentes, **caractérisé en ce que** le premier alignement du premier côté du plancher (2) s'étend de manière parallèle à l'axe longitudinal du véhicule.

6. Véhicule selon l'une quelconque des revendications précédentes, **caractérisé en ce que** le second côté comporte un second seuil de porte latérale (43), un second passage de roue arrière (51) et un second montant latéral arrière (62) qui délimitent latéralement, pour le second côté, la seconde bordure latérale de chacune des trois parties (21, 22, 23) du plancher (2) qui sont dans un même second alignement, permettant aux trois parties (21, 22, 23) du plancher (2) d'être entièrement recouvert par le tapis de sol (7) qui présente deux bordures opposées linéaires.

7. Véhicule selon la revendication 6, **caractérisé en ce que** le second alignement s'étend parallèlement au premier alignement.

8. Véhicule selon la revendication 7, **caractérisé en ce qu'**il comporte un tapis de sol (7) qui comporte deux bordures latérales parallèles entre elles, lesdites bordures latérales étant alignées selon l'axe longitudinal du véhicule.

## Patentansprüche

1. Fahrzeug mit einer Ladefläche (1), die sich entlang eines Bodens (2) erstreckt, der sich von den Mittelsäulen (3) zum Heck des Fahrzeugs hin erstreckt und für eine erste Seite des Fahrzeugs umfasst:
- einen ersten seitlichen Zugangsbereich (4) zur Ladefläche (1) mit einer ersten seitlichen Türschwelle (41);
- einen ersten hinteren Radkasten (5); und einen zweiten seitlichen Türschweller (41).
- einen hinteren Zugangsbereich (6) zur Ladefläche (1) mit einem ersten hinteren Seitenpfosten (61),
der erste Seitentürschweller (41), der erste hintere Radkasten (5) und die erste hintere Seitenstütze (61), die seitlich für die erste Seite, eine erste Seitenkante für einen vorderen Teil (21), einen mittleren Teil (22) und einen hinteren Teil (23) des Bodens (2) für die erste Seite begrenzen, wobei die erste Seitenkante jedes der drei Teile (21, 22, 23) des Fußbodens (2) in derselben ersten Ausrichtung liegt, so dass entlang der ersten Seite die drei Teile (21, 22, 23) des Fußbodens (2) vollständig von einer Fußmatte (7) bedeckt werden können, die eine erste lineare Kante (1) aufweist, sich ein zweites Zwischenelement (9) zwischen dem ersten hinteren Radkasten (5) und dem ersten hinteren Seitenpfosten (61) erstreckt, das zusammen mit dem Boden (2) eine lineare Seitenkante in der gleichen ersten Ausrichtung wie die erste Seitenkante für die Bodenabschnitte (21, 22, 23) bildet, **dadurch gekennzeichnet, dass** das zweite Zwischenelement (9) durch eine Verlängerung der Struktur des ersten hinteren Radkastens (5) gebildet wird, die sich bis zum ersten hinteren Seitenpfosten (61) erstreckt.

2. Fahrzeug nach Anspruch 1, **dadurch gekennzeichnet, dass** der erste seitliche Zugangsbereich (4) ein Verkleidungselement (42) aufweist, das zumindest teilweise den ersten seitlichen Türschweller (41) abdeckt, wobei das Verkleidungselement (42) einen linearen Endabschnitt aufweist, der die seitliche Begrenzung für die erste Seite des vorderen Teils (21) des Bodens (2) bildet.

3. Fahrzeug nach Anspruch 1 oder 2, **dadurch gekennzeichnet, dass** sich ein erstes Zwischenelement (8) zwischen dem ersten Seitentürschweller (41) und dem ersten hinteren Radkasten (5) erstreckt, das zusammen mit dem Boden (2) eine lineare Seitenkante in der gleichen ersten Ausrichtung wie die erste Seitenkante für die genannten Bodenteile (21, 22, 23) bildet.

4. Fahrzeug nach den Ansprüchen 2 und 3, **dadurch gekennzeichnet, dass** das erste Zwischenelement (8) durch eine Verlängerung (81) des Verkleidungselements (42) des ersten seitlichen Zugangsbereichs (4) gebildet wird.

5. Fahrzeug nach einem der vorstehenden Ansprüche, **dadurch gekennzeichnet, dass** die erste Ausrichtung der ersten Seite des Bodens (2) parallel zur Längsachse des Fahrzeugs verläuft.

6. Fahrzeug nach einem der vorstehenden Ansprüche, **dadurch gekennzeichnet, dass** die zweite Seite einen zweiten seitlichen Türschweller (43), einen zweiten hinteren Radkasten (51) und eine zweite hintere Seitensäule (62) aufweist, die für die zweite Seite seitlich die zweite Seitenkante jedes der drei Teile (21, 22, 23) des Bodens (2) begrenzen, die sich in derselben zweiten Ausrichtung befinden, so dass die drei Teile (21, 22, 23) des Bodens (2) vollständig von der Bodenmatte (7) bedeckt werden können, die zwei gegenüberliegende lineare Kanten aufweist.

7. Fahrzeug nach Anspruch 6, **dadurch gekennzeichnet, dass** die zweite Ausrichtung parallel zur ersten Ausrichtung verläuft.

8. Fahrzeug nach Anspruch 7, **dadurch gekennzeichnet, dass** es eine Bodenmatte (7) umfasst, die zwei zueinander parallele Seitenkanten aufweist, wobei die Seitenkanten entlang der Längsachse des Fahrzeugs ausgerichtet sind.

## Claims

1. A vehicle comprising a loading surface (1) extending along a floor (2) extending from the central pillars (3) towards the rear of the vehicle and comprising for a first side of the vehicle :
- a first lateral access area (4) to the loading surface (1) comprising a first lateral door sill (41);
- a first rear wheel arch (5); and a second side door sill (41).
- a rear access area (6) to the loading surface (1) comprising a first rear side post (61),
the first side door sill (41), the first rear wheel arch (5) and the first rear side post (61) delimiting laterally for the first side, a first side edge for a front part (21), a central part (22) and a rear part (23) of the floor (2), for the first side, the first lateral edge of each of the three parts (21, 22, 23) of the floor (2) being in the same first alignment allowing, along the first side, the three parts (21, 22, 23) of the floor (2) to be entirely covered by a floor mat (7) which has a first linear edge (1), a second intermediate member (9) extends between the first rear wheel arch (5) and the first rear side post (61) forming, together with the floor (2), a linear side edge in the same first alignment as the first side edge for said floor portions (21, 22, 23), **characterized in that** the second intermediate member (9) is formed by an extension of the structure of the first rear wheel arch (5) which extends to the first rear side post (61).

2. Vehicle according to claim 1, **characterised in that** the first lateral access area (4) has a cladding element (42) which at least partially covers the first lateral door sill (41), the cladding element (42) having a linear end portion which forms the lateral delimitation for the first side of the front part (21) of the floor (2).

3. A vehicle according to claim 1 or 2, **characterised in that** a first intermediate element (8) extends between the first side door sill (41) and the first rear wheel arch (5) forming, together with the floor (2), a linear side edge in the same first alignment as the first side edge for said floor portions (21, 22, 23).

4. Vehicle according to claims 2 and 3, **characterised in that** the first intermediate element (8) is formed by an extension (81) of the cladding element (42) of the first lateral access area (4).

5. Vehicle according to any one of the preceding claims, **characterised in that** the first alignment of the first side of the floor (2) extends parallel to the longitudinal axis of the vehicle.

6. Vehicle according to any one of the preceding claims, **characterised in that** the second side has a second side door sill (43), a second rear wheel arch (51) and a second rear side pillar (62) which laterally delimit, for the second side, the second side edge of each of the three parts (21, 22, 23) of the floor (2) which are in the same second alignment, allowing the three parts (21, 22, 23) of the floor (2) to be entirely covered by the floor mat (7) which has two opposite linear edges.

7. A vehicle according to claim 6, **characterised in that** the second alignment extends parallel to the first alignment.

8. The vehicle according to claim 7, **characterized in that** it comprises a floor mat (7) which has two lateral edges parallel to each other, said lateral edges being aligned along the longitudinal axis of the vehicle.
